# EUROPEAN PATENT SPECIFICATION

(11) **EP 3 260 268 B1**
(45) Date of publication and mention of the grant of the patent: **01.01.2020**
(21) Application number: 16752198.8
(22) Date of filing: 22.01.2016
(51) Int. Cl.: B29C 48/08, B29C 48/88, B29C 55/04, B29C 55/12, B29C 55/18, B29C 67/20, C08J 9/26, B29C 55/14, B29C 48/305

(54) **METHOD FOR PRODUCING MICROPOROUS PLASTIC FILM**
VORRICHTUNG ZUR HERSTELLUNG EINER MIKROPORÖSEN KUNSTSTOFFFOLIE
PROCÉDÉ DE PRODUCTION D'UNE FEUILLE PLASTIQUE MICROPOREUSE

(30) Priority: 20.02.2015 JP 2015031391
(43) Date of publication of application: 27.12.2017
(73) Proprietor: Toray Industries, Inc., Tokyo, 103-8666 (JP)
(72) Inventor: ICHINOMIYA, Takashi, Otsu-shi Shiga 520-8558 (JP); SUGATA, Masami, Tokyo 1038666 (JP)
(74) Representative: Mewburn Ellis LLP
(86) International application number: PCT/JP2016/051779
(87) International publication number: WO 2016/132809

(56) References cited:
- EP-A1- 2 707 195
- EP-A2- 0 747 199
- WO-A1-2015/146580
- GB-A- 1 319 320
- JP-A- H01 144 431
- JP-A- 2012 500 130
- JP-A- 2013 001 072
- US-A1- 2009 250 838

## Description

### Technical Field of the Invention

Our invention relates to a method for producing a microporous plastic film.

### Background Art of the Invention

Microporous plastic films have been broadly used as a substance separation membrane, permselective membrane, separator material of electrochemical element such as alkali rechargeable battery, lithium rechargeable battery, fuel cell and capacitor or the like. A separator for lithium ion battery is a particularly suitable application.

Patent documents 1 and 2 disclose a wet process for producing a microporous film made of plastic like polyolefin resin. In the wet process, a diluent such as liquid paraffin is added to a polymer, and is kneaded and dispersed, and then discharged through a die lip onto a cooling drum to be cooled and solidified to form a gel sheet, which is oriented uniaxially or biaxially by a roller method or tenter method for improving strength to produce a film having micropores by extracting the diluent.

Particularly by the roller method drawing the sheet in the travelling direction by a plurality of rollers, the lengthwise draw ratio can be changed freely by only changing a roller speed. By the other tenter method, the microporous plastic film can be improved in mechanical property because polyolefin molecules can be oriented with strong orientation in the drawing direction. As disclosed in Patent document 1, the roller method applied to the wet process might make the diluent bleed out from a gel sheet surface under a pressure caused by heat or tension while the conveying and drawing are performed in the presence of the diluent between film and roller. To draw such a gel sheet, the sheet is sufficiently cooled below the crystallization ending temperature of the polymer and is heated again below the melting point as disclosed in Patent document 2 where it is heated above the crystallization dispersion temperature. WO 2015/146580 A1 concerns a method for manufacturing a microporous plastic film having excellent quality of appearance while having characteristics such as strength, through use of a wet drawing method. US 2009/0250838 A1 concerns a method for manufacturing a high-quality porous film.

### Prior art documents

### Patent documents

Patent document 1: JP2009-249480-A
Patent document 2: JP2013-530261-A

### Summary of the Invention

### Problems to be solved by the Invention

The wet roller method disclosed in Patent document 1 might have a problem that the diluent intervening between the roller and film lubricates to meander or fail a desirable draw ratio because of slip.

According to Patent document 1, the above-described slip can be prevented when a tension over the lengthwise draw tension is given between the lengthwise drawing machine and the lateral drawing machine (tenter), wherein the tension should preferably be greater than the draw tension by 20%. However, we found that such a great tension over the draw tension drew the sheet downstream of the lateral drawing machine to cause an undesirable slip adversely and therefore the slip couldn't be prevented.

According to Patent document 2, a predetermined range of contact time, contact angle and contact length between the lengthwise drawing roller and the sheet can prevent the slip and the sheet surface from being damaged. However, we found even such measures couldn't fully prevent the slip when we had an increased draw speed, a decreased draw temperature or an increased draw ratio in order to improve physical properties and mechanical properties of the microporous plastic film.

Accordingly, it could be helpful to provide a method for producing a microporous plastic film excellent in physical properties and mechanical properties by a high-speed drawing without slip under a high productivity.

### Means for solving the Problems

To achieve the above-described object, our method for producing a microporous plastic film comprises: kneading a diluent and a polyolefin resin with an extruder; discharging the polyolefin resin kneaded with the diluent from a die lip in a sheet shape; cooling and solidifying the sheet discharged from the die lip on one or plurality of cooling drums; reheating and drawing the solidified sheet with a plurality of rollers in a sheet conveying direction; cooling the sheet drawn in the sheet conveying direction; gripping both ends of the sheet with clips; introducing the sheet into a tenter; and washing the diluent out to prepare a uniaxially or biaxially oriented microporous plastic film, wherein the method further comprises: driving a nip roller with a motor, the nip roller performing a nip along a line and pressing a sheet interposing between the nip roller and at least one of the rollers without forming a bank between the sheet and said at least one of the rollers.

In our method for producing a microporous plastic film, it is preferable that the method further comprises driving with a motor a nip roller pressing a sheet interposing between the nip roller and at least one of the rollers, the rollers heating the sheet in a process upstream from the drawing with the rollers in the sheet conveying direction.

### Effect according to the Invention

Our invention can produce, with high productivity, a microporous plastic film having excellent physical properties and mechanical properties by preventing slip even in wet roller drawing.

### Brief explanation of the drawings

[Fig. 1] Fig. 1 is a schematic side view of a production process of our microporous plastic film.
[Fig. 2] Fig. 2 is a schematic front view of an example of nip-roller-driving method in a production process of our microporous plastic film.
[Fig. 3] Fig. 3 is a schematic cross-section view of an example of nip-roller-driving method shown in Fig.2 in a production process of our microporous plastic film.

### Embodiments for carrying out the Invention

Hereinafter, desirable examples of our microporous plastic film will be explained with reference to figures.

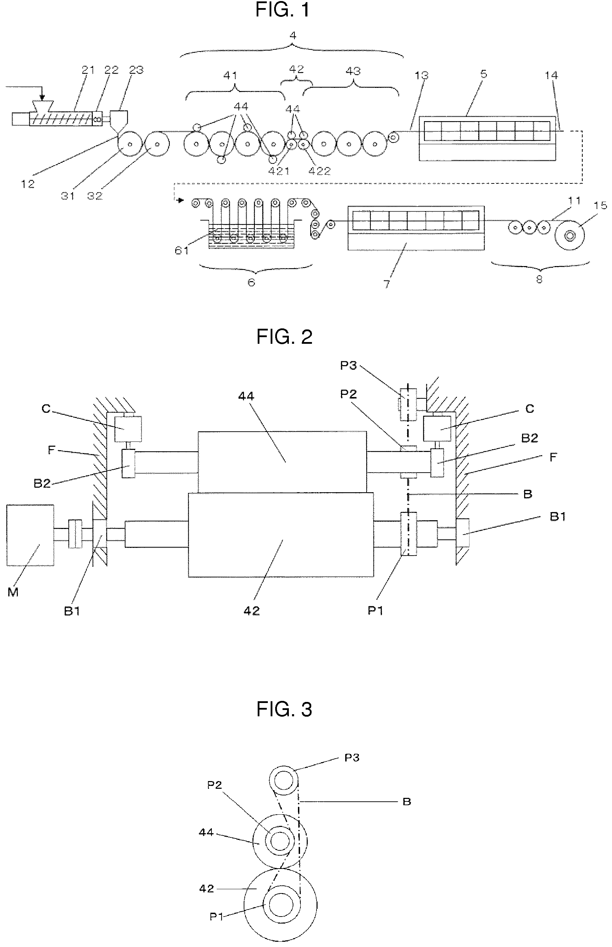

Fig. 1 is a schematic side view showing an example of production process of our microporous plastic film.

To desirably produce microporous plastic film 11, polyolefin resin is mixed with diluent and heated to melt to prepare polyolefin resin solution. The diluent decides a structure forming micropores of the microporous plastic film and contributes to improvement of drawability (for example, improvement as reduction of unevenness at a draw ratio for exhibiting a strength) at the time of drawing film.

The diluent is not limited particularly, as far as it can be mixed or dissolved with polyolefin resin. The diluent may be mixed with polyolefin resin in a melt-kneading state. Alternatively, it may be mixed with solid solvent at room temperature. Such prepared solid diluent may be stearyl alcohol, ceryl alcohol, paraffin wax or the like. It is preferable that the diluent is a liquid at room temperature from viewpoints of prevention of uneven drawing and coating convenience at a later stage. The liquid diluent may be a fatty series such as nonane, decane, decalin, paraxylene, undecane, dodecane and liquid paraffin; a cyclic fatty series or an aromatic hydrocarbon; a mineral oil fraction having a boiling point of the same range as the compounds thereof; or a phthalate ester, such as dibutyl phthalate and dioctylphthalate which are liquids at room temperature. To obtain a gelled sheet stably containing liquid diluent, it is preferable to employ a nonvolatile diluent such as liquid paraffin. For example, it is preferable that the liquid diluent has a viscosity of 20 to 200 cSt at 40°C.

It is preferable that the polyolefin resin of 10 to 50 mass% is mixed with the diluent in total 100 mass% of polyolefin resin and diluent, from a viewpoint of good formability of extruded product. The polyolefin resin solution may be melt-kneaded uniformly by a calendar, mixer or extruder 21 having a screw as shown in Fig. 1.

It is preferable that the polyolefin resin solution in extruder 21 has a predetermined temperature of which range is 140 to 250 °C for polyethylene composition and is 190 to 270 °C for polypropylene-containing composition, as depending on resin kind. A thermometer is provided inside extruder 21 or in a cylinder section to monitor a temperature indirectly and properly adjust the heater temperature, rotation speed and discharge rate of the cylinder section to control the temperature in a target range.

The polyolefin resin solution which has been melt-kneaded by extruder 21 is discharged through a slit section of die lip 23 into a sheet while it is measured with gear pump 22 as needed. Such discharged gelled sheet 12 is solidified as contacting cooling drum 31. Where, gelled sheet 12 becomes a pillar part with crystal structure made of the polyolefin resin supporting pores of microporous plastic film 11. Gelled sheet 12 becomes in a gel state since it includes the diluent melt-kneaded in extruder 21. A part of the diluent bleeds out from sheet surface by cooling gelled sheet 12 so that the sheet with wet surface made by the diluent is conveyed on cooling drum 31. The thickness of gelled sheet 12 can be adjusted by adjusting the cooling drum speed relative to the flow rate from the die lip slit section according to discharge rate.

It is preferable that cooling drum 31 has a temperature of 15 to 40 °C, which may affect on the crystal structure of gelled sheet 12. It is because the final cooling temperature should be below the crystallization ending temperature. The molecular orientation tends to advance in a later drawing process when the higher-order structure is fine. To make up for cooling time, it is possible, that the diameter of cooling drum 31 is enlarged, that cooling drum 32 is added to cooling drum 31 or that a plurality of cooling drums are further added. To make the crystal structure precise and uniform in gelled sheet 12, it is preferable that a parameter, such as convey speed, drum temperature, drum size and the number of drums, is designed in view of the cooling speed. For example, even when a target sheet temperature is 30°C, cooling drum 31 may be around 20°C in a case of too high speed and insufficient heat conduction. Besides, it is preferable that humidity is lowered by air conditioning when the temperature is below 25°C. Cooling drum 31 may have a shape of roller or belt. It is preferable that a surface of cooling drum 31 is made of a material which is excellent in shape stability and working accuracy to keep the roller speed constant. Such a material may be metal, ceramic or fiber composite material. It is particularly preferable that the surface is made of a metal which is excellent in heat conduction to a film. It is possible to perform non-adhesion coating or rubber coating on it to the extent that conduction is not obstructed. It is preferable that the surface of sheet and roller are made of metal including metal plating which is excellent in scratch resistance and heat conductivity and is not swelled by the bled-out diluent making wet state on the surface.

It is preferable that the roller has a surface roughness of 0.2 to 40 µm at the maximum height. To make a mirror surface, the surface roughness is preferably 0.2 to 0.8 µm. To make a sufficiently rough surface, the surface roughness is preferably 20 to 40 µm.

Because the surface of the roller is wet with the diluent, the mirror surface has a low coefficient of friction caused by lubrication. The rough surface has an increased coefficient of friction caused by less or no lubrication because the diluent discharges from the unevenness. Although the mirror surface and the rough surface may be combined as needed, it is basically preferable that the mirror surface is provided from viewpoints of maintenance such as cleaning and speed control precision, preferably with a certain lubricant with diluent to prevent the sheet from having uneven appearance.

It is preferable that cooling drums 31 and 32 are provided with a conventional heat pump or cooling device in addition to an internal flow path for refrigerant to control the surface temperature. The roller is driven to rotate by a rotation driving means such as motor at a predetermined speed while a speed-changing mechanism may be provided between rollers to apply draw tension or relaxation according to expansion and shrinkage of the sheet. Alternatively, each roller may be provided with a motor to achieve function like the speed-changing mechanism by accurately adjusting the speed by inverter or servo.

In Fig. 1, the top side of gelled sheet 12 is discharged from die lip 23 and contacts first cooling drum 31 which first contacts it, and then is rapidly cooled with refrigerant at the above-described temperature. On the other hand, the side opposite to the side contacting the above-described first cooling drum 31 is slowly cooled with air as shown in Fig. 1. Although it is not illustrated in the figures, it is preferable that the side opposite to the side contacting first cooling drum 31 is cooled by forced circulation with air nozzle or air chamber to make a rapid cooling of the opposite side. Such a configuration would be suitable to such a case that the conveying speed is high or the gelled sheet is too thick to conduct heat sufficiently from cooling drum 31. Also, the opposite side can be improved in cooling ability by providing a refrigerant-flowing nip roller in which refrigerant flows inside opposite to cooling drum 31.

To prevent wet gelled sheet 12 from meandering or degrading the cooling efficiency by lubrication, it is possible that the sheet is pushed onto cooling drum 31 with a contacting means such as nip roller, jet nozzle, suction chamber and electrostatic application. Such a contacting means can improve the travelling property and cooling efficiency of gelled sheet 12 to enable easy setting of the cooling speed and the final cooling temperature.

Next, gelled sheet 12 is oriented in a sheet-conveying direction with a plurality of roller groups in lengthwise drawing process 4, and then both ends of sheet 13 are gripped by a conventional clip to be oriented in a sheet width direction (direction orthogonal to the conveying direction) while the sheet is conveyed in the travelling direction while heated and kept warm in an oven. Such a drawing process achieves a high productivity and characteristics such as strength and air permeability of microporous film. The drawing process in the sheet-conveying direction (which may be called "lengthwise drawing") as well as driving process is performed with a roller having a metal surface and a temperature control mechanism such as conventional heater inside. To ensure the freedom of roller path, it is possible to provide an idler roller which is not driven and not shown in Fig. 1. Such an idler roller should have small bearing and inertia loss so that a small rotation power is sufficient because the coefficient of friction is small between wet film and roller, and should not be provided more than needed.

Alternatively, like cooling drum 31, it is preferable that heating roller group 41 or drawing roller group 42 has an internal structure in which the roller is provided with a flow path for heat medium such as vapor and pressured hot water. It is possible that the roller is supported as rotatable with bearings and a shaft end is connected to a heat-medium supply pipe with a rotary joint for supplying heat medium without obstructing the rotation of roller to supply heat medium to the inside.

It is preferable that the drawing is performed at a draw ratio of 5 to 12 in a sheet conveying direction although depending on the gelled sheet thickness. To improve strength and productivity, it is preferable that the drawing is performed at an area ratio of 30 or more in a sheet width direction together with the sheet conveying-directional drawing. It is preferable that the area ratio is 40 or more, preferably 60 or more.

It is preferable that a drawing temperature is a melting point of polyolefin resin or less. It is preferable that the temperature is in a range of [crystal dispersion temperature Tcd of polyolefin resin] to [melting point of polyolefin resin]. For example, it is preferable that the temperature is 80 to 130 °C for polyethylene resin, preferably 100 to 125 °C. After the drawing, a cooling process is performed down to these temperatures.

Thus performed drawing cleaves a higher order structure formed on the gelled sheet to miniaturize crystal phase and form many fibrils. The fibrils are three-dimensionally connected irregularly to form a web structure. It is suitable for a battery separator because the drawing improves mechanical strength and enlarges fine pores.

Thus obtained uniaxially oriented sheet 13 or biaxially oriented sheet 14 can be washed to remove diluent and dried up to make dry microporous plastic film 11 by a conventional technology as disclosed in WO2008/016174. To make microporous plastic film 11, it is possible that dry drawing process 7 is performed to reheat and redraw the sheet after washing process 6. Re-drawing process 7 may be performed with a roller or a tenter. Also, heat treatment may be performed to adjust physical properties and remove residual distortion through the process. Depending on intended purposes, it is possible that the surface of microporous plastic film 11 is subject to a surface treatment such as corona discharge or functional coating with heat-resistant particles.

In Fig. 1, included diluent bleeds out from gelled sheet 12 by being cooled on cooling drums 31 and 32. The diluent bleeds out even by stress derived from conveying tension. For the same reason, gelled sheet 12, oriented films 13 and 14 have a surface wet with diluent after being discharged from die lip 23 before the diluent is removed in washing process 6. In particular, gelled sheet 12 is heated up to the above-described drawing temperature with heating roller group 41 or the like in lengthwise drawing process 4, so that the heating accelerates the bleeding out of the diluent. Such amount of bleeding out is great particularly at a part from first cooling drum 31 to heating roller group 41 upstream of lengthwise drawing process 4. Because the diluent bleeding out drops along the roller surface in Fig. 1, it is preferable that a pan (not shown) to collect it to be discarded or reused is provided.

Although heating roller group 41 and drawing roller group 42 are common to each other in terms of heating and heat-keeping function of gelled sheet 12 and variable roller rotation speed, drawing roller group 42 comprises a roller to substantively draw gelled sheet 12 and generates a peripheral speed difference to permanently deform gelled sheet in the travelling direction. More particularly, drawing roller group 42 is defined as rollers which substantively draw it as generating 3% or more of peripheral speed difference.

As shown in Fig. 1 of our invention, the lengthwise drawing is performed to obtain a friction force balancing to the drawing tension by pressing gelled sheet 12 interposing between at least one of drawing roller group 42 and nip roller 44. It is preferable that nip roller 44 is provided even on drawing roller group 41 as well as cooling drums 31 and 32 shown in Fig. 1 as needed.

It is preferable that the surface of nip roller is made of rubber-like elastic material which can depress gelled sheet 12 uniformly onto uneven thickness of gelled sheet 12, deflection of roller and slight surface unevenness. The rubber-like elastic material is preferably a general vulcanized rubber such as Nitrile isoButylene-isoprene Rubber (NBR), Chloroprene Rubber (CR), Ethylene Propylene Rubber (EPDM) and Hypalon rubber (CSM). When gelled sheet 12 or conveying roller has a high temperature like 80°C or higher, it is particularly preferable to employ the EPDM or CSM. Under a higher temperature, it is preferable to employ a silicone rubber or a fluorine rubber as well as the vulcanized rubber. It is preferable to employ a rubber which is little swelled by diluent to prevent the roller from having a distorted shape over time.

Gripping force (frictional force) is necessary between the roller and gelled sheet 12 to convey gelled sheet 12 without meandering in a travelling direction. Particularly in drawing roller group 42 where a high tension is generated by drawing, a high gripping force balancing the drawing tension is required to achieve a necessary draw ratio. The diluent having bled out as described above interposes between the roller and gelled sheet 12 in lubrication state to cause a deterioration of the gripping force required for conveyance and drawing.

The diluent intervenes between nip roller 44 and gelled sheet 12 as well as between drawing roller and sheet. The friction force required for drawing is obtained from the friction between drawing roller 42 or nip roller 44 and gelled sheet 12. We found that the friction force required for drawing might obstruct straight travelling of gelled sheet 12 to cause meandering when the nip roller cannot rotate with lubrication of diluent between nip roller 44 and gelled sheet 12.

In our method for producing a microporous plastic film, nip roller 44 which presses a sheet interposing between the nip roller and at least one of the rollers of drawing roller group 42 is driven with a motor. With such a configuration, gelled sheet 12 can be prevented from meandering without rotation of nip roller even in the presence of diluent. The driving can suppress wear debris generation which might be increased on the surface of nip roller or gelled sheet 12 when nip roller idles and slightly contacts the sheet directly even in the presence of diluent. It is preferable that a nip roller is provided on each of all rollers of drawing roller group 42 while each nip roller is driven by a motor.

From a viewpoint of less slip and meandering, it is preferable that each driven nip roller and the drawing roller or cooling drum provided on the nip roller rotate at the same rotation speed. In the specification, "the same rotation speed" means the difference of both rotation speed is within ±3%.

Further, it is preferable that nip roller 44 which presses a sheet interposing between nip roller 44 and at least one of the rollers of heating roller group 41 is driven with a motor to obtain the same effect. It is preferable that nip roller 44 is provided on each of all rollers of heating roller group 41 while each nip roller 44 is driven by a motor.

Nip roller 44 may be driven by a driving force which is transmitted through belt B and pulleys PI, P2 and P3 from drawing roller group 42 driven by a motor as shown in Fig. 2. In more detail, pulley P1 is provided at a shaft end of drawing roller group 42 while pulley P2 is provided at a shaft end of nip roller 44. Because nip roller 44 and drawing roller group 42 should rotate in the same direction at a contact point, driving belt B should contact pulleys P1 and P2 as shown in Fig. 3. Therefore, auxiliary pulley P3 may be provided to drive nip roller 44 and drawing roller group 42 to rotate in the same direction at a contact point.

Alternatively, the drawing roller or nip roller may be driven through a gear, or may be driven by magnetic force without contact for preventing the belt and gear from making a dust. To prevent such a dust making, it is preferable that nip roller 44 is driven directly by a motor. In any cases, as shown in Fig. 2, belt B and the above-described driving devices should be provided not to obstruct the pressing force of a pressing cylinder by which nip roller 44 presses gelled sheet 12 interposing between the nip roller and drawing roller. For example, driving belt B is provided in a direction not to obstruct the pressing force applied from nip roller 44 onto drawing roller group 42 as shown in Fig. 3.

It is possible that a nip is performed along a tangent line substantively with a nip roller to introduce gelled sheet 12 into heating roller group 41 or drawing roller group 42, so that slip and meandering can be prevented as improving uniformity of thickness and appearance quality. That is because, when a nip roller is not provided along the tangent line, certain thickness of diluent and air is accompanied between drawing roller group 42 or heating roller group 41 and sheet 12 to make a bank by nipping with nip roller 44 afterwards. The nip roller which is provided substantively along the tangent line can suppress the thickness of diluent and air with nip roller 44 before contacting between drawing roller group 42 or heating roller group 41 and the sheet, so that an oriented sheet having a higher quality can be obtained without forming a bank between gelled sheet 12 and the roller.

The phrase "nip along the tangent line" means a nip performed by the nip roller at a position where gelled sheet 12 starts contacting heating roller group 41 or drawing roller group 42. The nip performed with the nip roller at this position makes gelled sheet 12 as if being a tangent line of nip roller. The phrase "a nip is performed along a tangent line substantively" means that a nip which doesn't make a bank is regarded as "a nip performed along a tangent line" even when the nipped part is slightly away from the exact position where the sheet starts contacting the roller.

### [Examples]

Hereinafter, our invention will be explained with reference to Examples although it is not limited to these Examples in particular.

### [Example 1]

A mixture is prepared by dry-blending of 0.375 parts by weight of tetrakis[methylene-3- (3 ,5-ditertiary butyl-4-hydroxyphenyl)-propionate]methane together with 100 parts by weight of polyethylene (PE) composition which comprises 40 mass% of ultrahigh molecular weight polyethylene having mass average molecular weight (Mw) of 2.5x10⁶ and 60 mass% of high-density polyethylene having Mw of 2.8x10⁵.

Thus obtained mixture is fed to twin-screw extruder 21 at flow rate of 97kg/hr by a film forming method shown in Fig. 1. Liquid paraffin as a diluent is fed at flow rate of 388 kg/hr to be blended at 210°C.

Thus obtained polyethylene solution is supplied into die lip 23 as being measured by a gear pump and the polyethylene solution at 210°C is discharged on first cooling drum 31 adjusted to 35°C by waterflow to form gelled sheet 12. First cooling drum 31 is driven to rotate at 10m/min.

Gelled sheet 12 is subject to sampling with 10mm square before introduction to lengthwise drawing process 4 to find that the thickness is 1.5mm in 10 times average of contact-type thickness meter. Since bled-out diluent adheres to the surface, the above-described thickness measurement includes ±0.1mm variation at the maximum

Gelled sheet 12 is heated to 110°C on the sheet surface with heating roller group 41 and a metal waterflow roller as the first drawing roller. Between heating roller group 41 and the first roller of each drawing roller group 42, the rotation speed of motor directly connected to the roller is controlled to make the downstream side faster by 1% of speed difference according to thermal expansion of the sheet.

Drawing roller group 42 consists of 2 rollers shown in Fig. 1. Nip roller 44 of which surface is coated with fluoro-rubber is provided onto each roller to perform lengthwise drawing by speed difference between rollers. Each nip roller is driven by a driving mechanism shown in Fig. 2 at a rotation speed almost the same (nip roller is 2% faster) as each drawing roller contacting through a film. The speed is controlled to set to 9 the total draw ratio of uniaxially oriented sheet 13 passing lengthwise drawing process 4, wherein the speed of first cooling drum 31 is set to 10m/min, speed ratio from heating roller group 41 to upstream drawing roller 421 is set to 1%, the speed of upstream drawing roller 421 is set to 10.4m/min, and the speed of drawing roller 422 is set to 10.4 x 8.66 = 90m/min.

Oriented film 13 is cooled on four rollers of cooling roller group 43 including last roller 422 of drawing roller group 42 to adjust the waterflow roller temperature to make the sheet temperature 50°C. Each clip speed difference between the last drawing roller, cooling roller group 43 and lateral drawing process is 0 to make the speed same.

From first cooling drum 31, surfaces of all rollers in lengthwise drawing process 4 are made of steel coated with hard chromic plating of which surface roughness is 0.4µm (0.4S) at the maximum height. A preliminary sample has drawing tension T of 1,500N, nip roller pressure P of 2,000N and coefficient of friction µ of 0.15.

Both ends of oriented film 13 are gripped with a clip to perform lateral drawing at draw ratio of 6 times at 115°C in an oven, and then biaxially oriented film 14 cooled down to 30°C is washed in a washing bath of methylene chloride kept at 25°C to remove liquid paraffin. The washed film is dried up in a dry kiln kept at 60°C and then is drawn again in redrawing process 7 at areal ratio of 1.2 times in lengthwise and lateral directions. The heat treatment is performed for 20 seconds by 88.2m/min at 125°C to prepare microporous plastic film 11 having thickness of 16µm and width of 2,000mm.

### [Comparative Example 1]

A microporous plastic film is produced by the same devices and conditions as Example 1, except that nip roller is not driven.

### [Slip on drawing roller]

The speeds of sheet and roller are measured by 1% accuracy including installation accuracy with a non-contact Doppler velocimeter (made by ACT Electronics Corp., model 1522). For all Examples and Comparative Examples, slip of film 11 before drawing is evaluated according to the following standards.

No good: The speed difference between roller and sheet is 10% or more of roller rotation speed.

Acceptable: The speed difference between roller and sheet is 5% or more and less than 10% of roller rotation speed.

Good: The speed difference between roller and sheet is less than 5% of roller rotation speed.

### [Meandering amount in lengthwise drawing process]

The amount of meandering in lengthwise drawing process 4 is evaluated according to the following standards.

No good: Meandering amount is 10mm or more.

Acceptable: Meandering amount is 5mm or more and less than 10mm.

Good: Meandering amount is less than 5mm.

### [Physical properties and mechanical properties of microporous plastic film]

The Gurley impermeability is determined according to JIS P8117 with Oken type Impermeability Tester (made by Asahi Seiko Co., Ltd., EGO-1T).

The thrust strength is determined from the maximum load applied when a needle having 1mm diameter and spherical tip (Radius of curvature R=0.5mm) is pricked at 2mm/sec into a microporous membrane having membrane thickness T1. The measured maximum load La is converted to Lb which would be the maximum load when membrane thickness is 16µm according to the following formula: Lb = (La x 16) /T1 to calculate the thrust strength [N/16µm].

Good: The Gurley impermeability is 250sec ± 20sec while the thrust strength is 6N or more.

No good: Outside the range for the above-described Good

**[Table 1]**

| | Conveyance | | Physical properties, mechanical properties | | |
|---|---|---|---|---|---|
| | Slip on drawing roller | Meandering | Thrust strength [N] | Gurley impermeability [sec] | Comprehensive evaluation of physical properties |
| Example 1 | Good | Good | 6 | 150 | Good |
| Comparative Example 1 | No good | No good | - | - | - |

By comparing Example 1 and Comparative Example 1, the drawing can be performed stably to suppress slip and meandering in Example 1 because the nip roller provided on each drawing roller and the drawing roller. In contrast, the slip and meandering cannot be prevented in Comparative Example 1 because the nip roller is not driven. The meandering is too great to continue the film forming and therefore a microporous plastic film cannot be sampled.

As described above, our invention makes it possible to provide a microporous plastic film excellent in strength and physical properties as maintaining a travelling stability in a drawing condition where the drawing is performed to give the microporous film desirable properties.

### Industrial Applications of the Invention

Our microporous plastic film is applicable, but not limited in particular, to a separator used for electrochemical reaction device such as rechargeable battery, fuel cell and capacitor as well as a functional web such as filtration membrane, print film and clothing material.

### Explanation of symbols

- 11:: microporous plastic film
- 12:: gelled sheet (film)
- 13:: uniaxially oriented sheet (film)
- 14:: biaxially oriented sheet (film)
- 15:: microporous plastic film roll
- 21:: extruder
- 22:: gear pump
- 23:: die lip
- 31:: first cooling drum
- 32:: second cooling drum
- 33:: refrigerant-flowing nip roller
- 4:: lengthwise drawing process
- 41:: heating roller group
- 42:: drawing roller group
- 421:: first drawing roller
- 422:: second drawing roller
- 43:: cooling roller group
- 44:: nip roller
- 5:: lateral drawing process
- 6:: washing/drying process
- 61:: washing solvent
- 7:: re-drawing heat-treatment process
- 8:: take-up process
- P1:: pulley provided by drawing roller
- P2:: pulley for driving nip roller
- P3:: auxiliary pulley
- C:: press cylinder
- F:: stand frame
- 81:: bearing for drawing roller
- 82:: bearing for nip roller double as cylinder rod connecting part
- B:: driving belt
- M:: motor

## Claims

1. A method for producing a microporous plastic film (11), the method comprising:
kneading a diluent and a polyolefin resin with an extruder (21);
discharging the polyolefin resin kneaded with the diluent from a die lip (23) in a sheet shape;
cooling and solidifying the sheet discharged from the die lip (23) on one or plurality of cooling drums;
reheating and drawing the solidified sheet with a plurality of rollers in a sheet conveying direction;
cooling the sheet drawn in the sheet conveying direction;
gripping both ends of the sheet with clips;
introducing the sheet into a tenter; and
washing the diluent out to prepare a uniaxially or biaxially oriented microporous plastic film, wherein the method further comprises:
driving a nip roller (44) with a motor, the nip roller performing a nip along a tangent line and pressing a sheet interposing between the nip roller (44) and at least one of the rollers without forming a bank between the sheet and said at least one of the rollers.

2. The method for producing a microporous plastic film (11) according to claim 1, further comprising driving with a motor a nip roller (44) pressing a sheet interposing between the nip roller (44) and at least one of the rollers, the rollers heating the sheet in a process upstream from the drawing with the rollers in the sheet conveying direction.

## Patentansprüche

1. Verfahren zur Herstellung einer mikroporösen Kunststofffolie (11), wobei das Verfahren Folgendes umfasst:
das Kneten eines Verdünners und eines Polyolefinharzes mit einem Extruder (21);
das Ausstoßen des Polyolefinharzes, das zusammen mit dem Verdünner geknetet wurde, aus einer Düsenlippe (23) in Form einer Bahn;
das Abkühlen und Verfestigen der aus der Düsenlippe (23) ausgestoßenen Bahn auf einer oder einer Vielzahl von Kühltrommeln;
das Nacherwärmen und das Recken der verfestigten Bahn mit einer Vielzahl von Walzen in Bahnförderrichtung;
das Abkühlen der in der Bahnförderrichtung gereckten Bahn;
das Ergreifen beider Enden der Bahn mit Spannschellen;
das Einbringen der Bahn in einen Spannrahmen; und
das Auswaschen des Verdünners, um eine uniaxial oder biaxial gereckte mikroporöse Kunststofffolie zu erzeugen,
wobei das Verfahren weiters Folgendes umfasst:
das Antreiben einer Andruckwalze (44) mit einem Motor, wobei die Andruckwalze einen Andruck entlang einer Tangente ausführt und die zwischen der Andruckwalze (44) und zumindest einer der Walzen befindliche Bahn presst, ohne eine Wölbung zwischen der Bahn und der zumindest einen der Walzen auszubilden.

2. Verfahren zur Herstellung einer mikroporösen Kunststofffolie (11) nach Anspruch 1, das weiters das Antreiben einer Andruckwalze (44) mit einem Motor umfasst, die die zwischen der Andruckwalze (44) und zumindest einer der Walzen befindliche Bahn presst, wobei die Walzen die Bahn in einem dem Recken mit den Walzen in der Bahnförderrichtung vorgeschalteten Prozess erwärmen.

## Revendications

1. Procédé de production d'un film plastique microporeux (11), le procédé comprenant les étapes consistant à :
malaxer un diluant et une résine de polyoléfine avec une extrudeuse (21) ;
décharger la résine de polyoléfine malaxée avec le diluant à partir d'une lèvre de filière (23) sous une forme de la feuille ;
refroidir et solidifier la feuille déchargée de la lèvre de matrice (23) sur un ou plusieurs des tambours de refroidissement ;
réchauffer et étirer la feuille solidifiée avec une pluralité de rouleaux dans une direction de transport de feuille ;
refroidir la feuille étirée dans la direction de transport de feuille ;
saisir les deux extrémités de la feuille à l'aide de pinces ;
introduire la feuille dans une rame ; et
laver le diluant pour préparer un film plastique microporeux à orientation uniaxiale ou biaxiale, dans lequel le procédé comprend en outre l'étape consistant à :
entraîner un rouleau pinceur (44) à l'aide d'un moteur, le rouleau pinceur effectuant un pincement le long d'une ligne tangente et pressant une feuille s'interposant entre le rouleau pinceur (44) et au moins un des rouleaux sans former de rive entre la feuille et ledit au moins un des rouleaux.

2. Procédé de fabrication d'un film plastique microporeux (11) selon la revendication 1, comprenant en outre l'entraînement à l'aide d'un moteur d'un rouleau pinceur (44) pressant une feuille s'interposant entre le rouleau pinceur (44) et au moins l'un des rouleaux, les rouleaux chauffant la feuille dans un processus en amont de l'étirage avec les rouleaux dans la direction de transport de feuille.
